**Europäisches Patentamt**

**European Patent Office**

**Office européen des brevets**

(19)

(11) Veröffentlichungsnummer: **0 222 976**
B1

(12) # EUROPÄISCHE PATENTSCHRIFT

(45) Veröffentlichungstag der Patentschrift:
27.12.90

(21) Anmeldenummer: 86110170.7

(22) Anmeldetag: 24.07.86

(51) Int. Cl.⁵: **G01N 25/20**, G01N 25/22,
G01N 25/42, G01N 25/48

(54) Vorrichtung zur Bestimmung und Überwachung von Stoff-Konzentrationen in flüssigen Medien (II).

(30) Priorität: 21.09.85  DE 8527072 U

(43) Veröffentlichungstag der Anmeldung:
27.05.87 Patentblatt 87/22

(45) Bekanntmachung des Hinweises auf die Patenterteilung:
27.12.90 Patentblatt 90/52

(84) Benannte Vertragsstaaten:
AT BE CH DE FR GB IT LI LU NL SE

(56) Entgegenhaltungen:
CH-A- 639 773
DE-C- 3 437 624
GB-A- 2 013 892
US-A- 4 397 958

(73) Patentinhaber: Degussa Aktiengesellschaft,
Weissfrauenstrasse 9, D-6000 Frankfurt am Main 1(DE)

(72) Erfinder: Kürzinger, Karl, Dr., Lilienstrasse 14,
D-6450 Hanau 8(DE)
Erfinder: Wachendörfer, Peter, Manscheiderstrasse 60,
D-6000 Frankfurt/Main 71(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Bestimmung und Überwachung von in Förderleitungen transportierten flüssigen Stoff-Konzentrationen, die bei Umsetzung mit anderen Stoffen in einer exothermen Reaktion vollständig abreagieren, durch Messung des Temperaturanstiegs bei dieser Umsetzung, bestehend aus einer Meßzelle mit Zulaufleitungen für das Reaktionsmedium und den reagierenden Stoff, Ablaufleitung und Temperaturfühlern.

Eine solche Vorrichtung ist aus der CH-AS 639 773 bekannt.

Solche Vorrichtungen dienen insbesondere zur Bestimmung und Überwachung von Wasserstoffperoxid- und Chlorit-Konzentrationen in Waschlösungen bei der Rauchgaswäsche von z.B. Müllverbrennungsanlagen oder Großfeuerungsanlagen.

Bei vielen kontinuierlichen und diskontinuierlichen chemischen Verfahren, die mit Wasserstoffperoxid, Natriumchlorit oder sonstigen Oxidations- oder Reduktionsmitteln arbeiten, ist es notwendig, deren Konzentration fortwährend messend zu überwachen und bei Bedarf zu regulieren.

Dies gilt insbesondere auch für moderne Verfahren der Rauchgaswäsche, bei denen Schwefeldioxid mit Hilfe von wasserstoffperoxidhaltigen Lösungen oder Stickoxide mit Hilfe von natriumchlorithaltigen Lösungen aus den Rauchgasen entfernt werden.

Wäßrige Natriumchloritlösungen werden neuerdings dazu verwendet, das in den Rauchgasen von Müllverbrennungsanlagen enthaltende Stickstoffmonoxid durch Naßwäsche in Stickstoffdioxid überzuführen. In sauren Chloritlösungen entsteht je nach pH-Wert mehr oder weniger freies Chlordioxid, das äußerst explosibel ist. Es ist daher wichtig, in solchen Lösungen den Chloritgehalt fortwährend zu überwachen und zu regeln.

In der nicht vorveröffentlichten DE-PS 3 437 624 wird eine Vorrichtung vorgeschlagen, mit der sich Wasserstoffperoxidkonzentrationen in flüssigen Reaktionsmedien überwachen und regeln lassen, indem man in einer Meßzelle einen Teilstrom der wasserstoffperoxidhaltigen Lösung mit Schwefeldioxid vollständig umsetzt und den von der Reaktionswärme herrührenden Temperaturanstieg des Gemisches mißt. Der Temperaturanstieg ist ein Maß für die Wärmeentwicklung und damit auch ein Maß für die Wasserstoffperoxidkonzentration in dem Reaktionsmedium. Analog lassen sich mit Schwefeldioxid oder anderen Reduktionsmitteln auch die Konzentrationen anderer Oxidationsmittel, wie z.B. Natriumchlorit, in wäßrigen Lösungen bestimmen. Die Vorrichtung besteht aus einer thermisch isolierten Meßzelle, die an einem Ende getrennt eine Zulaufleitung für einen Teilstrom des oxidierenden Reaktionsmediums und eine Zulaufleitung für den reagierenden Stoff, z.B. Schwefeldioxid, aufweist und am anderen Ende eine Ablaufleitung besitzt. An den Zulaufleitungen und an der Ablaufleitung sind Temperaturfühler zur Messung der Eingangs- und Ausgangstemperatur der Flüssigkeiten angebracht.

Diese Meßzelle muß an eine Teilstromleitung des Reaktionsmediums angeschlossen sein und erfordert dadurch zusätzliche Leitungen, Dosiereinrichtungen, Ventile und/oder Pumpen. Erstrebenswert ist daher der direkte Anschluß an die Förderleitung des Reaktionsmediums, die z.B. die Waschflüssigkeit aus dem Sumpf zum Wäscherkopf einer Absorptionskolonne fördert.

Es war daher Aufgabe der vorliegenden Erfindung eine Vorrichtung zur Bestimmung und Überwachung von in Förderleitungen transportierten flüssigen Stoffkonzentrationen, die bei Umsetzung mit anderen Stoffen in einer exothermen Reaktion vollständig abreagieren, durch Messung des Temperaturanstiegs bei dieser Umsetzung zu entwickeln, bestehend aus einer Meßzelle mit Zulaufleitungen für das Reaktionsmedium und den reagierenden Stoff, Ablaufleitung und Temperaturfühlern, die ohne zusätzlichen Leitungen und Förderelemente betrieben werden kann.

Diese Aufgabe wurde erfindungsgemäß dadurch gelöst, daß ein mit einem Temperaturfühler versehener Rohrabschnitt mit etwa dem gleichen Durchmesser wie die das Reaktionsmedium transportierende Förderleitung beidseitig mit Befestigungselementen zum Einbau in die Förderleitung versehen ist und daß an diesen Rohrabschnitt ein beiderseits offener U-förmiger Rohrabschnitt geringeren Durchmessers angebracht ist, wobei die beiden Schenkel des U-förmigen Rohrabschnitts an ihren offenen Enden rechtwinklig abgebogen in den Rohrabschnitt mit dem größeren Durchmesser hineinragen, während das Mittelteil des U-förmigen Rohrabschnitts sich außerhalb befindet und mit einer thermischen Isolierung, der Zulaufleitung für den reagierenden Stoff und einem Thermofühler zur Messung der erhöhten Temperatur des Gemisches versehen ist.

Vorzugsweise ist der Durchmesser des U-förmigen Rohrabschnitts höchstens halb so groß als der des Rohrabschnitts, der in eine Förderleitung eingebaut wird. Dadurch ist sichergestellt, daß nur ein kleiner Teilstrom des Reaktionsmediums durch den U-förmigen Rohrabschnitt fließt, der als Meßzelle dient.

Die erfindungsgemäße Vorrichtung läßt sich problemlos in eine das Reaktionsmedium transportierende Förderleitung einbauen. Sie benötigt keine zusätzlichen Leitungen, Ventile oder Pumpen, um einen für die Messung notwendigen Teilstrom zu erzeugen. Die Befestigungselemente zum Einbau in die Förderleitung können beispielsweise als Flansch oder als Verschraubung ausgeführt sein.

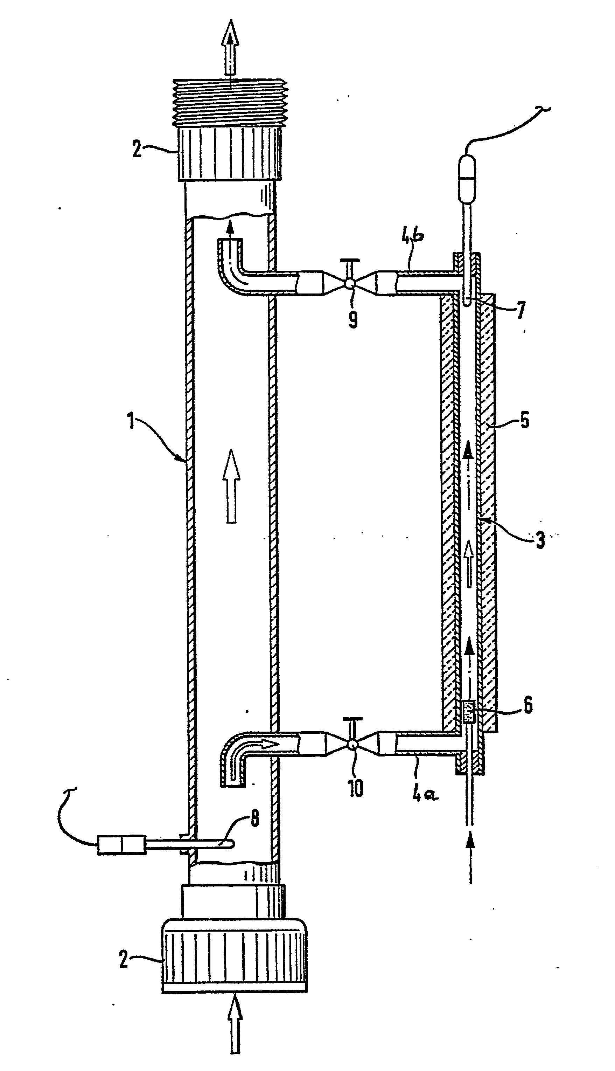

Die Abbildung zeigt schematisch eine beispielhafte Ausführungsform der erfindungsgemäßen Vorrichtung. Diese besteht aus einem Rohrabschnitt (1), dessen Durchmesser in etwa dem der Förderleitung entspricht, in die sie mit Hilfe der Befestigungselemente (2) an den beiden Rohrabschnittsenden eingebaut wird. An diesen Rohrabschnitt (1) ist ein beiderseits offener U-förmiger Rohrabschnitt (3) geringeren Durchmessers angebracht. Die beiden Schenkel (4a, 4b) dieses U-förmigen Rohrabschnitts sind an ihren offenen Enden rechtwinklig abgebogen und ragen so in den Rohrabschnitt (1) mit dem größeren Durchmesser hinein, daß ein Teilstrom des Reaktionsmediums durch diesen U-förmigen Rohrabschnitt (3) fließen kann, dessen Mittelteil außerhalb des Rohrabschnitts (1) liegt und mit einer thermischen Isolierung (5), einer Zuführungsleitung (6) für den reagierenden Stoff und einem Thermofühler (7) versehen ist. Die Temperatur des einströmenden Reaktionsmediums, beispielsweise eine wäßrige Lösung von Natriumchlorit oder Wasserstoffperoxid, wird mittels eines Thermofühlers (8) beim Eintritt in den Rohrabschnitt (1) gemessen. Die eigentliche Meßzelle in dem U-förmigen Rohrabschnitt (3) wird gebildet von dem Teilabschnitt zwischen der Zuführungsleitung (6) für den reagierenden Stoff, beispielsweise gasförmiges Schwefeldioxid, und dem Thermofühler (7), der die Temperaturerhöhung durch die ablaufende exotherme Reaktion mißt, die ein Maß für die Konzentration des Natriumchlorits bzw. Wasserstoffperoxids ist. Die Menge des Teilstroms des Reaktionsmediums im U-förmigen Rohrabschnitt (3) kann zusätzlich mittels der Ventile (9, 10) geregelt werden. Bei Sperrung dieser Ventile kann der U-förmige Teil ohne Unterbrechung der Hauptförderleitung abgenommen und z.B. bei einem etwaigen Defekt ausgetauscht werden.

## Patentansprüche

1. Vorrichtung zur Bestimmung und Überwachung von in Förderleitungen transportierten flüssigen Stoff-Konzentrationen, die bei Umsetzung mit anderen Stoffen in einer exothermen Reaktion vollständig abreagieren, durch Messung des Temperaturanstiegs bei dieser Umsetzung, bestehend aus einer Meßzelle (3) mit Zulaufleitungen (4a, 6) für das Reaktionsmedium und den reagierenden Stoff, Ablaufleitung (4b) und Temperaturfühlern (7, 8), dadurch gekennzeichnet, daß ein mit einem Temperaturfühler (8) versehener Rohrabschnitt (1) mit etwa dem gleichen Durchmesser wie die das Reaktionsmedium transportierende Förderleitung beidseitig mit Befestigungselementen (2) zum Einbau in die Förderleitung versehen ist und daß an diesem Rohrabschnitt (1) ein beiderseits offener U-förmiger Rohrabschnitt (3) geringeren Durchmessers angebracht ist, wobei die beiden Schenkel (4a und 4b) des U-förmigen Rohrabschnitts (3) an ihren offenen Enden rechtwinklig abgebogen in den Rohrabschnitt (1) mit dem größeren Durchmesser hineinragen, während das Mittelteil des U-förmigen Rohrabschnitts (3) sich außerhalb befindet und mit einer thermischen Isolierung (5), der Zulaufsleitung (6) für den reagierenden Stoff und einem Temperaturfühler (7) zur Messung der erhöhten Temperatur des Gemisches versehen ist.

2. Vorrichtung nach Anspruch 1, dadurch gekennzeichnet, daß der Durchmesser des U-förmigen Rohrabschnitts (3) höchstens halb so groß ist wie der des in die Förderleitung einbaubaren Rohrabschnitts (1).

## Claims

1. Apparatus for the determination and monitoring of liquid substance concentrations transported in conveyor pipes, which substances react completely with other substances by an exothermic reaction, by measurement of the rise in temperature during this reaction, consisting of a measuring cell (3) having inflow pipes (4a, 6) for the reaction medium and the reacting substance, an outflow pipe (4b) and temperature probes (7, 8), characterised in that a pipe section (1) equipped with a temperature probe (8) and having about the same diameter as the conveyor pipe transporting the reaction medium is equipped on both sides with fastening elements (2) for installation in the conveyor pipe and in that a U-shaped pipe section (3) of smaller diameter which is open at both ends is attached to this pipe section (1), the two arms (4a and 4b) of the U-shaped pipe section (3) being bent at right angle at their open ends where they extend into the pipe section (1) of larger diameter while the middle portion of the U-shaped pipe section (3) is situated outside and provided with a thermal insulation (5), the inflow pipe (6) for the reacting substance and a temperature probe (7) for measuring the raised temperature of the mixture.

2. Apparatus according to Claim 1, characterised in that the diameter of the U-shaped pipe section (3) is at most half as great as that of the pipe section (1) which is adapted to be installed in the conveyor pipe.

## Revendications

1.- Dispositif pour déterminer et contrôler les concentrations de substances liquides, transportées dans des conduites de transfert, substances qui réagissent complètement lors de la réaction avec d'autres substances en une réaction exothermique par mesure de l'augmentation de la température lors de cette réaction, consistant en une cellule de mesure (3) avec des conduites d'amenée (4a, 6) pour le milieu réactionnel et la substance qui doit réagir, une conduite d'évacuation (4b) et des détecteurs de chaleur (7, 8) caractérisé en ce qu'une section de tube (1) pourvue d'un détecteur de chaleur (8), ayant environ le même diamètre que la conduite de transfert transportant le milieu réactionnel, est munie aux deux côtés d'éléments de fixation (2) en vue de l'insertion dans la conduite de transfert et en ce que, sur cette section de tube (1), une section de tube (3) de diamètre plus faible en forme de U, ouverte aux deux côtés tés, est installée, en ce que les deux branches (4a) et (4b) de la section de tube en forme de U (3), coudés à leurs extrémités ouvertes à angle droit, pénétrent dans la section de tube (1) qui a le diamètre plus grand, alors que la partie médiane de la section de tube (3) en forme de U se trouve à l'extérieur et est munie d'une isolation thermique (5) d'une conduite d'amenée (6) pour la substance qui doit réagir, et d'un détecteur de chaleur (7) pour la mesure de l'élévation de température du mélange.

2.- Dispositif selon la revendication 1, caractérisé en ce que le diamètre de la section de tube (3) en forme de U est au plus, moitié aussi grand que celui de la section de tube (1) insérable dans la conduite de transport.